# EUROPEAN PATENT SPECIFICATION

(11) **EP 3 135 528 B1**
(45) Date of publication and mention of the grant of the patent: **16.10.2019**
(21) Application number: 15183278.9
(22) Date of filing: 01.09.2015
(51) Int. Cl.: B65H 75/42, H02G 11/02, B65H 75/12, B65H 75/44, B60L 53/16, B65H 57/12

(54) **AUTOMATICALLY WINDING ENERGY-TRANSFER CABLE ARRANGEMENT FOR A VEHICLE**
AUTOMATISCH AUFWICKELBARE KABELANORDNUNG FÜR EIN FAHRZEUG
AGENCEMENT DE CABLE DE TRANSFERT D'ENERGIE A ENROULEMENT AUTOMATIQUE POUR UN VEHICULE

(30) Priority: 12.08.2015 FI 20154145 U
(43) Date of publication of application: 01.03.2017
(73) Proprietor: Mattoasennus Karjalainen Oy, 87400 Kajaani (FI)
(72) Inventor: KARJALAINEN, Aapo, 87250 Kajaani (FI); KARJALAINEN, Olli, 87500 Kajaani (FI); KARJALAINEN, Ville, 92140 Raahe (FI); KARJALAINEN, Aku, 87500 Kajaani (FI); KARJALAINEN, Topi, 87100 Kajaani (FI)
(74) Representative: Heinonen & Co

(56) References cited:
- DE-A1-102010 040 797
- DE-A1-102011 006 104
- DE-U1-202007 005 412
- US-A- 4 258 834
- US-A- 5 145 040
- US-A- 5 803 216

## Description

### TECHNICAL FIELD OF THE INVENTION

The invention relates to an energy-transfer cable arrangement for a vehicle. In particular, the invention relates to an automatically winding energy-transfer cable arrangement for a vehicle.

### BACKGROUND OF THE INVENTION

In cold areas it is useful to pre-warm the engine of a vehicle, not only for an easier cold start of the engine but also to reduce the fuel consumption of the engine. Often it is so that a heater placed in the engine compartment has a plug routed to the front part of the car and that a separate cable coupled to the plug connects the heater to an electrical outlet, usually to a power pole provided in a parking lot. Electric and hybrid vehicles, which are becoming more and more popular at a fast pace, also require an energy-transfer cable to be coupled to an electric plug provided on the vehicle and to be connected to a charging station, in order to recharge the batteries of the vehicle.

The separate cable has many disadvantages. It may be lost, and, usually, it is kept in the footwell of the car where it can be subjected to damage. Attempts have been made to solve this problem by means of vehicle-integrated windable cables, for instance, of which an example is shown in US2005161548A.

In the above-mentioned specification, the windable heater cable, and the housing thereof, are located behind the license plate. This is not possible in all vehicles and, in addition, imposes unnecessary restrictions on where the fixedly mounted energy-transfer cable can be located in the vehicle.

US 5145040 A discloses a cable winding device for stowage of a supply cable connecting for example a central aircraft supply system of an airport to a supply plug connection of an aircraft is proposed. The cable winding device comprises a housing having a winder means for an energy-transfer cable, and a protective tube connected to the housing to protect the energy-transfer cable outside the housing.

DE 102010040797 A1 discloses an electric coiled cable for charging a battery of an electric car. A charging plug (7) or a charging socket (18) is attached at an extendible end of the electrical cable. A swingable lighting unit, i.e. back lamp unit, is formed as covering for the charging plug and/or the charging socket. The lighting unit is pivoted around a long side and around vertical running axles. A hinge is provided for pivoting the lighting unit. The lighting unit comprises a taillight device, a mist light device, a parking light device and/or a stop light device. The document presents a protective tube around the cable outside of the car.

### SUMMARY OF THE INVENTION

The present invention aims at providing a solution eliminating or alleviating the above-mentioned drawbacks. In particular, the invention aims at solving how to allow a freer positioning of a winding energy-transfer cable in a vehicle.

The winding energy-transfer cable of the invention is characterized in what is set forth in the independent claim 1.

According to an embodiment of the present invention, the automatically winding energy-transfer cable arrangement for a vehicle at least comprises a housing having winder means for an energy-transfer cable, and, a protective tube connected to the housing to protect the energy-transfer cable outside the housing. The protective tube allows a freer positioning of the housing, together with the energy-transfer cable and the winder means thereof, in a vehicle, and, for example, at a greater distance from the bumper, which may make it possible to provide other equipment in the bumper, or close to it, without any hindrance from the energy-transfer cable arrangement.

According to the embodiment of the present invention, the protective tube is made of an elastic material, which may further facilitate the positioning of the energy-transfer cable arrangement in a vehicle.

According to the embodiment of the present invention, the energy-transfer cable arrangement also comprises an electric plug protecting cap to be fixed to the vehicle. This may allow the electric plug to be protected against dirt or damage, when it is not in use, and to prevent the winder means from winding the energy-transfer cable into the housing in a greater length than what is desirable for the use thereof.

According to still another embodiment, the energy-transfer cable arrangement comprises means for heating the energy-transfer cable. This embodiment facilitates the use of the energy-transfer cable, also at very low temperatures, and reduces the risk of the energy-transfer cable becoming damaged, compared to if it is wound up cold.

According to still another embodiment, the energy-transfer cable arrangement comprises a timer to time the heating and/or charging. This embodiment also provides the possibility to use of a timer when there is no timer available otherwise.

In this specification, the term "an energy-transfer cable" especially refers to a conductor for transferring electric energy, allowing energy to be transferred from a source outside a vehicle, such as from a charging outlet, to the vehicle or to an apparatus comprised by the vehicle.

The present invention has a great variety of applications. It is useful for vehicle engine pre-warming, and/or for vehicle interior heaters and/or for charging electric or hybrid car batteries, for instance. It will be understood by a person skilled in the art that the energy-transfer cable arrangement connectable to a vehicle also can be used for some other purpose, to supply electric power from a source outside the vehicle to a desired component, apparatus or means provided in the vehicle or at the vehicle.

### BRIEF DESCRIPTION OF THE DRAWINGS

In the following, preferred embodiments of the invention will be explained with reference to the accompanying drawings wherein
Figure 1 is a perspective view of an energy-transfer cable arrangement according to an embodiment of the present invention,
Figure 2 is an exploded view of the energy-transfer cable arrangement according to the embodiment of Figure 1,
Figure 3 is an exploded view of an energy-transfer cable arrangement according to another embodiment of the present invention,
Figure 4 is an exploded view of an energy-transfer cable arrangement according to still another embodiment of the present invention.

### DETAILED DESCRIPTION OF THE EMBODIMENTS

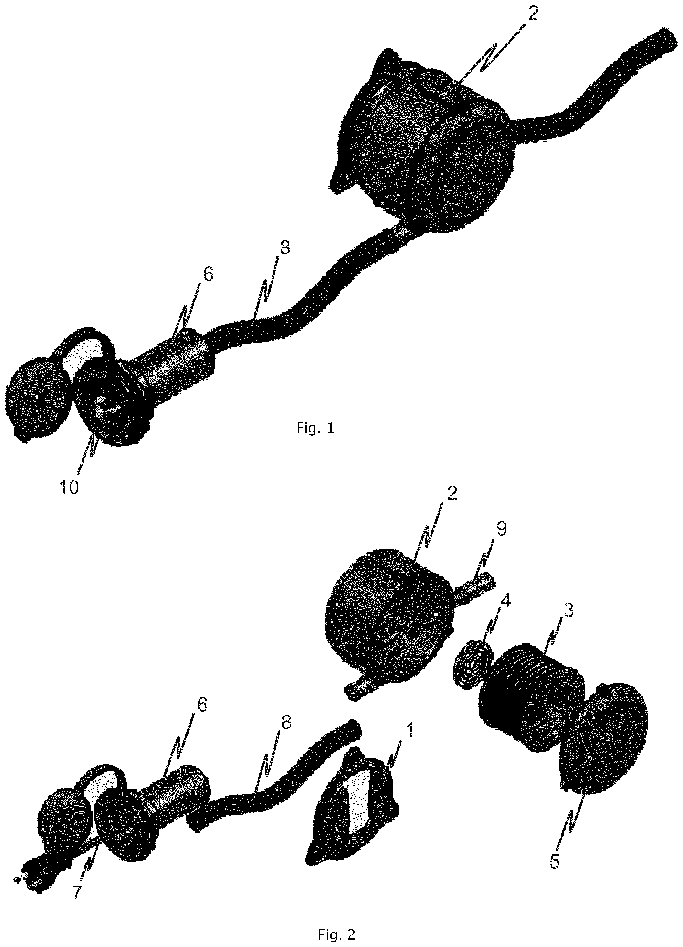

Figure 1 is an exploded view of an energy-transfer cable arrangement according to an embodiment of the present invention. According to an embodiment, the automatically winding energy-transfer cable arrangement for a vehicle at least comprises a housing 2 having winder means (not shown in the Figure) for an energy-transfer cable, and, a protective tube 8 connected to the housing 2 to protect the energy-transfer cable outside the housing. According to an embodiment, the protective tube 8 is made of an elastic material, thus allowing a freer positioning of the energy-transfer cable arrangement in a vehicle.

In the embodiment shown in Figure 1, the housing 2 also comprises an electric plug protecting cap 6 according to an embodiment, receiving an electric plug 10 connected to the energy-transfer cable while the energy-transfer cable is wound back into the housing. The electric plug protecting cap 6 is preferably positioned in the vehicle so as to allow the user to easily access the electric plug and, by means of it, to pull out any necessary length of the energy-transfer cable.

Figure 2 shows conventional components comprised by the energy-transfer cable arrangement, such as a housing cover 5, a fixing member 1 for fixing the housing to the vehicle and a plug connector 9 for an engine heater and/or a rechargeable battery/rechargeable batteries. In the embodiment shown in Figure 2, the winder means are constituted by a coil spring 4 and a cable reel 3 enclosed by the housing 2 and having a locking mechanism. Naturally, when wound up, the energy-transfer cable 7 surrounds the reel 3.

The automatic winding of the energy-transfer cable, which is based on the cable reel 3 and the coil spring, usually is carried out by tugging at the energy-transfer cable to unlock the reel and to wind the energy-transfer cable back onto the reel, pulled by the spring. In addition, the reel is usually provided with automatic locking in order to lock the energy-transfer cable at a desired length.

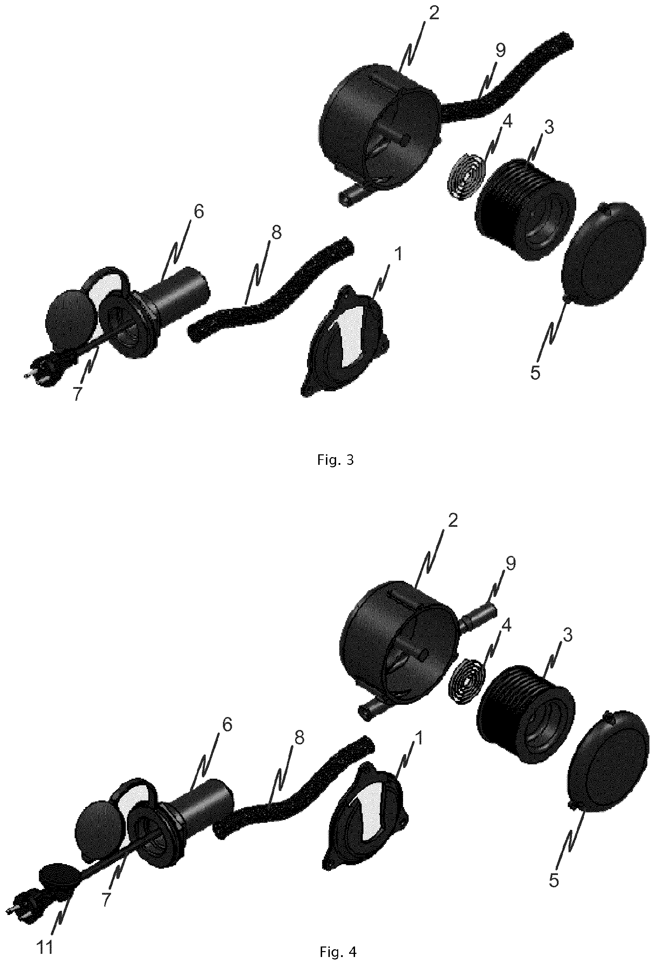

In the embodiment shown in Figure 3, the plug connector 9 for an engine heater and/or a rechargeable battery/ rechargeable batteries also is made of an elastic material to allow an even freer positioning of the energy-transfer cable arrangement in the engine compartment of a vehicle. The protective tube 8 and the plug connector 9, which are elastic, can be given any desired length to enable the energy-transfer cable arrangement to be placed in a suitable space in a vehicle, such as in the engine compartment thereof. In this space, the protective tube routes the cord as desired.

According to an embodiment, the energy-transfer cable arrangement also comprises means for heating the energy-transfer cable. The heating means, such as a resistor, are preferably located at the protective tube 8, such as inside of it.

In the embodiment shown in Figure 4, the energy-transfer cable arrangement also comprises a timer 11, the timer being placeable anywhere suitable. In the embodiment of Figure 4, the timer is placed at the electric plug 10, allowing the user to easily access the timer 11 by simply pulling the timer 11, together with the plug 10, out of the protective cap 6. At the same time, the timer itself is protected after the energy-transfer cable arrangement has been wound into the protective cap. The timer allows electricity to be automatically supplied to the energy-transfer cable and, thus, to the vehicle at any desired time. If the energy-transfer cable itself is heatable, it may be preferable that the cable heating power still stays on after the timer has switched off the power. This keeps the cord warm and elastic for rewinding.

The above only disclosed a few embodiments of the solution according to the present invention. Of course, the idea of the invention, such as the executional details and ways of application thereof, are susceptible to modifications within the scope defined by the claims.

## Claims

1. An automatically winding energy-transfer cable arrangement for a vehicle, arranged inside of a car's engine compartment comprising
- a housing (2) having winder means for an energy-transfer cable (7), and
- a protective tube (8) connected to the housing to protect the energy-transfer cable outside the housing, which protective tube (8) is made of elastic material, **characterized in that** said energy transfer cable arrangement further comprises
- an electric plug protecting cap (6) adapted to be fixed to the vehicle in such way that the protective tube extends between said housing and said protecting cap (6), and
- a plug connector (9) for an engine heater and/or a rechargeable battery, which plug connector (9) is made of flexible material.

2. An energy-transfer cable arrangement as defined in claim 1, **characterized in that** the energy-transfer cable arrangement also comprises means for heating the energy-transfer cable.

3. An energy-transfer cable arrangement as defined in any of the preceding claims, **characterized in that** the energy-transfer cable arrangement also comprises a timer (11) to time the energy supply to the vehicle.

4. An energy-transfer cable arrangement as defined in claims 2 and 3, **characterized in that** the heating of the energy-transfer cable is on although the timer is in a state wherein the energy supply to the vehicle is not on.

5. An energy-transfer cable arrangement as defined in claim 1, **characterized in that** the energy-transfer cable is connected in the vehicle for supplying energy for heating of the vehicle.

6. An energy-transfer cable arrangement as defined in claim 1, **characterized in that** the energy-transfer cable is connected in the vehicle for supplying energy for charging batteries of the vehicle.

## Patentansprüche

1. Automatisch aufwickelbare Energieübertragungs-Kabelanordnung für ein Fahrzeug, die im Inneren des Motorraums eines Fahrzeugs angeordnet ist, umfassend
- ein Gehäuse (2) mit Wickeleinrichtung für ein Energieübertragungskabel (7), und
- einen Schutzschlauch (8), der mit dem Gehäuse verbunden ist, um das Energieübertragungskabel außerhalb des Gehäuses zu schützen, wobei der Schutzschlauch (8) aus einem elastischen Material hergestellt ist, **dadurch gekennzeichnet, dass** die Energieübertragungs-Kabelanordnung weiter umfasst
- eine Elektrostecker-Schutzkappe (6), die ausgelegt ist, um am Fahrzeug so befestigt zu sein, dass sich der Schutzschlauch zwischen dem Gehäuse und der Schutzkappe (6) erstreckt, und
- einen Steckverbinder (9) für eine Motorheizung und/oder eine wiederaufladbare Batterie, wobei der Steckverbinder (9) aus einem flexiblen Material hergestellt ist.

2. Energieübertragungs-Kabelanordnung nach Anspruch 1,
**dadurch gekennzeichnet, dass** die Energieübertragungs-Kabelanordnung auch Mittel zum Heizen des Energieübertragungskabels umfasst.

3. Energieübertragungs-Kabelanordnung nach einem der vorhergehenden Ansprüche, **dadurch gekennzeichnet, dass** die Energieübertragungs-Kabelanordnung auch einen Zeitgeber (11) umfasst, um die Energiezufuhr an das Fahrzeug zu takten.

4. Energieübertragungs-Kabelanordnung nach Anspruch 2 und 3,
**dadurch gekennzeichnet, dass** das Heizen des Energieübertragungskabels eingeschaltet ist, obwohl sich der Zeitgeber in einem Zustand befindet, in dem die Energiezufuhr an das Fahrzeug nicht eingeschaltet ist.

5. Energieübertragungs-Kabelanordnung nach Anspruch 1, **dadurch gekennzeichnet, dass** das Energieübertragungskabel im Fahrzeug angeschlossen ist, um Energie zum Heizen des Fahrzeugs zu liefern.

6. Energieübertragungs-Kabelanordnung nach Anspruch 1, **dadurch gekennzeichnet, dass** das Energieübertragungskabel im Fahrzeug angeschlossen ist, um Energie zum Laden von Batterien des Fahrzeugs zu liefern.

## Revendications

1. Agencement de câble de transfert d'énergie à enroulement automatique pour un véhicule, disposé à l'intérieur d'un compartiment moteur d'une voiture comprenant :
- un boîtier (2) ayant un moyen d'enrouleur pour un câble de transfert d'énergie (7), et
- un tube protecteur (8) raccordé au boîtier afin de protéger le câble de transfert d'énergie à l'extérieur du boîtier, lequel tube (8) protecteur est constitué d'un matériau élastique, **caractérisé en ce que** ledit agencement de câble de transfert d'énergie comprend en outre
- un capuchon de protection de prise électrique (6) adaptée pour être fixé au véhicule d'une manière telle que le tube protecteur s'étende entre ledit logement et ledit capuchon protecteur (6) et
- un connecteur enfichable (9) pour un chauffe-moteur et/ou une batterie rechargeable, lequel connecteur enfichable est constitué d'un matériau flexible.

2. Agencement de câble de transfert d'énergie selon la revendication 1,
**caractérisé en ce que** l'agencement de câble de transfert d'énergie comprend aussi un moyen pour chauffer le câble de transfert d'énergie.

3. Agencement de câble de transfert d'énergie selon une quelconque des revendications précédentes, **caractérisé en ce que** l'agencement de câble de transfert d'énergie comprend aussi un temporisateur (11) pour synchroniser l'alimentation électrique du véhicule.

4. Agencement de câble de transfert d'énergie selon les revendications 2 et 3,
**caractérisé en ce que** le chauffage du câble de transfert d'énergie est en marche bien que le temporisateur soit dans un état dans lequel l'alimentation électrique du véhicule n'est pas en marche.

5. Agencement de câble de transfert d'énergie selon la revendication 1, **caractérisé en ce que** le câble de transfert d'énergie est raccordé dans le véhicule pour alimenter électriquement le chauffage du véhicule.

6. Agencement de câble de transfert d'énergie selon la revendication 1, **caractérisé en ce que** le câble de transfert d'énergie est raccordé dans le véhicule pour alimenter électriquement les batteries de charge du véhicule.
